# EUROPEAN PATENT APPLICATION

(11) **EP 1 414 100 A1**
(43) Date of publication of application: **28.04.2004**
(21) Application number: 02728212.8
(22) Date of filing: 31.05.2002
(51) Int. Cl.: H01M 10/46, H02J 7/35

(54) **PHOTOCHARGEABLE SECONDARY BATTERY**

(30) Priority: 04.06.2001 JP 2001168793; 04.06.2001 JP 2001168794; 04.06.2001 JP 2001168804; 04.06.2001 JP 2001168805
(71) Applicant: Sony Corporation, Tokyo 141-0001 (JP)
(72) Inventor: WATANABE, Haruo, c/o SONY CORPORATION, Tokyo 141-0001 (JP); INOUE, Ritsuko, c/o SONY CORPORATION, Tokyo 141-0001 (JP); HINOKUMA, Koichiro, c/o SONY CORPORATION, Tokyo 141-0001 (JP); WATANABE, Tomikazu, c/o SONY CORPORATION, Tokyo 141-0001 (JP); MIYAZAWA, Hiroshi, c/o SONY CORPORATION, Tokyo 141-0001 (JP)
(74) Representative: Müller, Frithjof E., Dipl.-Ing.
(86) International application number: PCT/JP2002/005394
(87) International publication number: WO 2002/099921

(57) **Abstract**

The present invention concerns a photoelectric charging secondary battery durable enough to be repeatedly used which is obtained by combining a photoelectric conversion sheet including a photoelectric conversion element formed having a flexibility and a durability with a storage battery. The photoelectric charging secondary battery includes a cylindrical coil core part (2), a photoelectric conversion element (11) having a flexibility coiled and disposed so as to be freely withdrawn out relative to the coil core part, a storage battery (4) capable of being charged and discharged, and a control circuit part (5) for controlling the charge and discharge of the storage battery. While the photoelectric conversion element is coiled on the coil core part, the photoelectric charging secondary battery is entirely formed in a substantially cylindrical form. The storage battery is detachably attached to the coil core part. The photoelectric conversion element is folded along a direction to be withdrawn. An engaging part (3a) forming a knob is provided in the photoelectric conversion element and a means for accommodating a plurality of different kinds of batteries is provided.

## Description

### Technical Field

The present invention relates to a photoelectric charging secondary battery for charging a storage battery by a photoelectric conversion element. More specifically, the storage battery is detachably attached to a coil core part and the photoelectric conversion element is accommodated in a folded form. The storage battery is spread upon charging to improve a charging efficiency by widening a light receiving surface. In the photoelectric charging secondary battery, a means for holding the photoelectric conversion element and a knob for making a coiling operation easy are provided. In the photoelectric charging secondary battery, the storage battery is detachably attached to the coil core part, and further, not only a storage battery having a specific form, but also a storage battery having a form smaller than that of the above-described storage battery can be used by employing the holding means.

### Background Art

The photoelectric conversion element is also referred to as a solar cell and is an element for converting optical energy such as solar light to electric energy. This photoelectric conversion element does not discharge exhaust materials such as carbon dioxide differently from fossil fuel which has been hitherto used, when the electric energy is taken out from the optical energy. Further, since the photoelectric conversion element can take out the electric energy from the optical energy such as the solar light that is said to be substantially inexhaustible, a power can be semi-permanently generated. Therefore, the use or a scale of use of the photoelectric conversion element is expected to increasingly expand in future from the viewpoint of a global atmospheric problem.

However, the optical energy such as the solar light frequently greatly changes with the lapse of time and the electric energy of power generated by converting the optical energy also greatly changes with the lapse of time. Therefore, most of the photoelectric conversion elements are not suitably used for direct power sources of electric devices. Further, since the optical energy such as the solar light exists in a spatially thin state, the photoelectric conversion element needs a large light receiving surface area to obtain a prescribed quantity of electric power suitable for use.

Accordingly, the photoelectric conversion element is employed as an auxiliary power source of the electric device, or employed for the purpose of temporarily charging a storage battery with the converted electric energy and discharging the electric energy from the storage battery to be used.

On the other hand, the electric device has been progressively miniaturized with the progress of various kinds of processing techniques and frequently formed as a portable device. Therefore, in the electric device, a dry cell that is ordinarily convenient for a portable device and can be readily used is employed as a power source thereof.

As photoelectric charging secondary batteries in which the advantages of the photoelectric conversion element as described above are combined with the utility of the dry cell, the batteries described in, for instance, Japanese Patent Application Laid-Open No. sho 63-314780 (battery) or Japanese Patent Application Laid-Open No. hei 2-73675 (cylindrical charging type solar cell) or the like have been proposed. In such photoelectric charging secondary batteries, a photoelectric conversion element as a power generating part is combined with a storage battery as a charging and discharging part and the combination is used to a standard of a cylindrical battery. Thus, the ordinarily used electric device is actually driven by electric power produced by the optical energy.

In a usual photoelectric charging secondary battery, all the outer surface area of a storage battery is hardly effectively utilized to allow a photoelectric conversion element to receive the optical energy of solar light or the like applied from one direction. Further, the photoelectric conversion element cannot have a light receiving area exceeding the outer surface area of the storage battery in view of its structure. Therefore, in the usual photoelectric charging secondary battery, a charging time upon charging the storage battery is too short to endure a practical use. Besides, the photoelectric conversion element cannot generate even electric power necessary for charging the storage battery.

Thus, the inventors of the present invention propose a photoelectric charging secondary battery in which a photoelectric conversion element having a flexibility is combined with a storage battery, so that the optical energy of solar light or the like can be used as the power source of an ordinarily used electric device in the specification and drawings of Japanese Patent Application No. hei 10-351505. According to this invention, the inventors of the invention realize the photoelectric charging secondary battery which can be easily used as the power source of the ordinarily used electric device.

In the photoelectric charging secondary battery as described above, when the storage battery is charged, the photoelectric conversion element having the flexibility is repeatedly withdrawn out to increase the light receiving surface for use. At this time, the photoelectric conversion element receives an external force upon repeatedly withdrawing. As a result of a trial manufacture and a study, the inventors found that the external force was generated due to the friction of the photoelectric conversion element having the flexibility and its sliding system and needed to be increased so that the external force could not be overlooked. In this case, they found that the photoelectric conversion element was broken or deteriorated due to the external force, a power generation efficiency as an entire part of the photoelectric conversion element was lowered, and accordingly, a charging performance was lowered.

### Disclosure of the Invention

It is an object of the present invention to solve the above-described problems, and accordingly, to provide a photoelectric charging secondary battery in which a photoelectric conversion sheet having a photoelectric conversion element formed with a flexibility and a durability is combined with a storage battery to have a charging performance durable enough to be repeatedly used.

Further, it is an object of the present invention to provide a photoelectric charging secondary battery having a better charging efficiency.

A photoelectric charging secondary battery according to the present invention comprises: a cylindrical coil core part; a photoelectric conversion element having a flexibility coiled and disposed so as to be freely withdrawn out relative to the coil core part; a storage battery capable of being charged and discharged; and a control circuit part for controlling the charge and discharge of the storage battery. The photoelectric charging secondary battery is entirely formed in a substantially cylindrical shape while the photoelectric conversion element is coiled on the coil core part. The storage battery is detachably attached to the coil core part and the photoelectric conversion element is folded along a direction to be withdrawn.

More specifically, the photoelectric charging secondary battery according to the present invention wherein that, while the photoelectric conversion element is coiled on the coil core part, the photoelectric charging secondary battery is configured in a prescribed standardized form for a cylindrical battery. The photoelectric charging secondary battery wherein that the discharge voltage of the storage battery is located within a range of 0.6 to 1.9 V and the storage battery has a prescribed standardized form for a cylindrical battery. Further, the photoelectric charging secondary battery wherein that the photoelectric conversion element is folded in two along the direction to be withdrawn or the photoelectric conversion element is folded threefold along a direction to be withdrawn.

In the photoelectric charging secondary battery constructed as described above, the storage battery having a standard form can be used, general-purpose characteristics are increased, and a utility can be improved. Further, the photoelectric conversion element having the flexibility has little curl so that the photoelectric conversion element can be easily treated and effectively receive light.

Further, it is an object of the present invention to provide a means capable of fixing the photoelectric conversion element to the other member in the engaging part of the withdrawing end part of the photoelectric conversion element in order to secure the photoelectric conversion element in a specific direction, realize a stable charging operation and prevent the damage or deterioration of the photoelectric conversion element upon charging.

A photoelectric charging secondary battery according to the present invention comprises: a cylindrical coil core part; a photoelectric conversion element having a flexibility and a storage battery capable of being charged and discharged which are coiled and disposed so as to be freely withdrawn out relative to the coil core part; and a control circuit part for controlling the charge and discharge of the storage battery. The photoelectric charging secondary battery is entirely formed in a substantially cylindrical shape. An upper flange and a lower flange located at both the ends of the coil core part and respectively formed in substantially circular flat plate shapes are provided integrally with the coil core part. A cylindrical outer peripheral wall having a withdrawing hole as a port for withdrawing the photoelectric conversion element is provided so as to cover the photoelectric conversion element therewith. The outer peripheral wall is supported to freely rotate with the upper flange and the lower flange. The photoelectric conversion element is withdrawn out and coiled to an inner space formed by the coil core part and the outer peripheral wall by rotating the outer peripheral wall. The engaging part of the withdrawing end part of the photoelectric conversion element is provided with a means capable of fixing the photoelectric conversion element to the other member.

Further, in the photoelectric charging secondary battery according to the present invention, an arched body is fixed to the engaging part so as to freely rotate. The arched body is circularly bent viewed from a side surface side and removable. Further, in the arched body, the circularly bent part from the side surface side can be reversed. The curvature of the circularly bent part is substantially the same as that of the outer peripheral wall and the circularly bent part is accommodated in the outermost peripheral curved surface of the outer peripheral wall. The rotation of the arched body is engaged.

Ii is an object to form a grip means that makes it possible to easily accommodate the photoelectric conversion element.

A photoelectric charging secondary battery according to the present invention comprises: a cylindrical coil core part; a photoelectric conversion element having a flexibility and a storage battery capable of being charged and discharged which are coiled and disposed so as to be freely withdrawn out relative to the coil core part; and a control circuit part for controlling the charge and discharge of the storage battery. The photoelectric charging secondary battery is entirely formed in a substantially cylindrical shape. An upper flange and a lower flange located at both the ends of the coil core part and respectively formed in substantially circular flat plate shapes are provided integrally with the coil core part. A cylindrical outer peripheral wall having a withdrawing hole as a port for withdrawing the photoelectric conversion element is provided so as to cover the photoelectric conversion element therewith. The outer peripheral wall is supported to freely rotate with the upper flange and the lower flange. The photoelectric conversion element is withdrawn out and coiled to an inner space formed by the coil core part and the outer peripheral wall by rotating the outer peripheral outer wall and a grip means is formed in the coil core part.

Further, in the photoelectric charging secondary battery according to the present invention, the grip means is formed in the coil core part, the grip means is withdrawn out and extended from the coil core part or the grip means accommodated in the coil core part is withdrawn and extended to easily rotate the photoelectric conversion element.

It is an object of the present invention to provide a photoelectric charging secondary battery having a charging performance sufficiently endurable to be repeatedly used by combining a photoelectric conversion sheet with a flexibility and a durability in which a photoelectric conversion element is formed with a storage battery.

Further, it is an object to provide a photoelectric charging secondary battery in which not only a battery having a specific form, but also storage batteries having forms of two or more kinds of sizes can be used.

A photoelectric charging secondary battery according to the present invention comprises: a cylindrical coil core part; a photoelectric conversion element having a flexibility coiled and disposed so as to be freely withdrawn out relative to the coil core part; a storage battery capable of being charged and discharged; and a control circuit part for controlling the charge and discharge of the storage battery. The photoelectric charging secondary battery is entirely formed in a substantially cylindrical shape while the photoelectric conversion element is coiled on the coil core part. The storage battery is removable relative to the coil core part. A storage battery having a specific form can be used, and further, a storage battery smaller in form than the above-described storage battery can be used by employing a holding means.

More specifically, the photoelectric charging secondary battery according to the present invention wherein that while the photoelectric conversion element is coiled on the coil core part, the photoelectric charging secondary battery is configured in a prescribed standardized form for a cylindrical battery. The photoelectric charging secondary battery wherein that the discharge voltage of the storage battery ranges from 0.6 to 1.9 V. The photoelectric charging secondary battery wherein that the storage battery has a prescribed standardized form for a cylindrical battery. The photoelectric charging secondary battery wherein that the holding means of the storage battery is used upon using the storage battery of a small size. The photoelectric charging secondary battery wherein that the holding means of the storage battery holds the storage battery by an elastic force.

Consequently, a plurality of forms of storage batteries can be employed and general purpose characteristics are increased, so that a utility can be improved.

Still another objects of the present invention and specific advantages obtained by the present invention will become apparent from the explanation of embodiments described below.

### Brief Description of the Drawings

Fig. 1 is a longitudinally sectional view showing a photoelectric charging secondary battery according to the present invention.
Fig. 2A is a schematic perspective view of a photoelectric charging secondary battery under a state in which a photoelectric conversion sheet carrying a photoelectric conversion element is withdrawn out and the photoelectric conversion sheet folded in two is spread. Fig. 2B is a schematic perspective view of a photoelectric charging secondary battery under a state in which the photoelectric conversion sheet carrying the photoelectric conversion element is withdrawn out and the photoelectric conversion sheet folded threefold is spread:
Fig. 3 is a plan view showing the photoelectric conversion sheet withdrawn out from a coil core part and whose folded structure is spread.
Fig. 4 is a sectional view taken along a line IV-IV in Fig. 3.
Fig. 5 is a partly longitudinally sectional view of a photoelectric charging secondary battery having an upper flange and a lower flange having grooves to which side edge parts of an outer peripheral wall are fitted to freely rotate.
Fig. 6 is a cross-sectional view of a photoelectric charging secondary battery showing a state in which the photoelectric conversion sheet carrying the photoelectric conversion element is partly withdrawn out.
Fig. 7 is a perspective view of the photoelectric charging secondary battery under a state in which the photoelectric conversion sheet carrying the photoelectric conversion element is partly withdrawn out and the photoelectric conversion sheet folded in two is spread.
Fig. 8 is a cross-sectional view of the photoelectric charging secondary battery shown in Fig. 7.
Fig. 9A is a front view of the photoelectric charging secondary battery under a state that a rotary and removable arched body is formed in an engaging part. Fig. 9B is a front view of the photoelectric charging secondary battery showing a state that the arched body is detached from the engaging part, reversed and accommodated in a groove part in an opposite side. Fig. 9C is a bottom view of the photoelectric charging secondary battery shown in Fig. 9A. Fig. 9D is a bottom view of the photoelectric charging secondary battery shown in Fig. 9B.
Fig. 10 is a schematic view showing a state that the arched body is hooked on a fixing means and the photoelectric conversion sheet is withdrawn and extended vertically.
Fig. 11A is a schematic side view of the photoelectric charging secondary battery under a state that the arched body is hooked on a fixing means coming into tightly contact with a glass window in an indoor part and the photoelectric conversion sheet is withdrawn and extended vertically. Fig. 11B is a schematic side view under a state that the arched body is hooked on the fixing means coming into tightly contact with a glass window in an outdoor part and the photoelectric conversion sheet is withdrawn and extended vertically.
Fig. 12A is a plan view of the photoelectric charging secondary battery under a state before the upper flange is slid. Fig. 12B is a front view thereof.
Fig. 13A is a plan view of the photoelectric charging secondary battery under a state that the upper flange is slid. Fig. 13B is a front view thereof.
Fig. 14 is a longitudinally sectional view of a photoelectric charging secondary battery according to the present invention when a AA type battery is used as a storage battery.
Fig. 15 is a longitudinally sectional view of a photoelectric charging secondary battery according to the present invention when a AAA type battery is used as a storage battery by using a holding means.
Fig. 16 is a perspective view showing one form of a holding means of a storage battery according to the present invention.

### Best Mode for Carrying Out the Invention

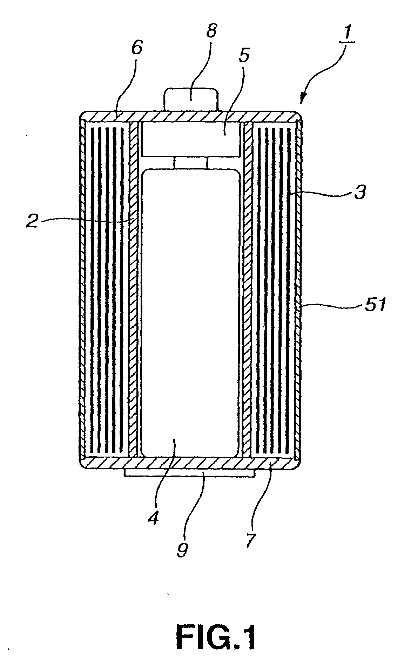

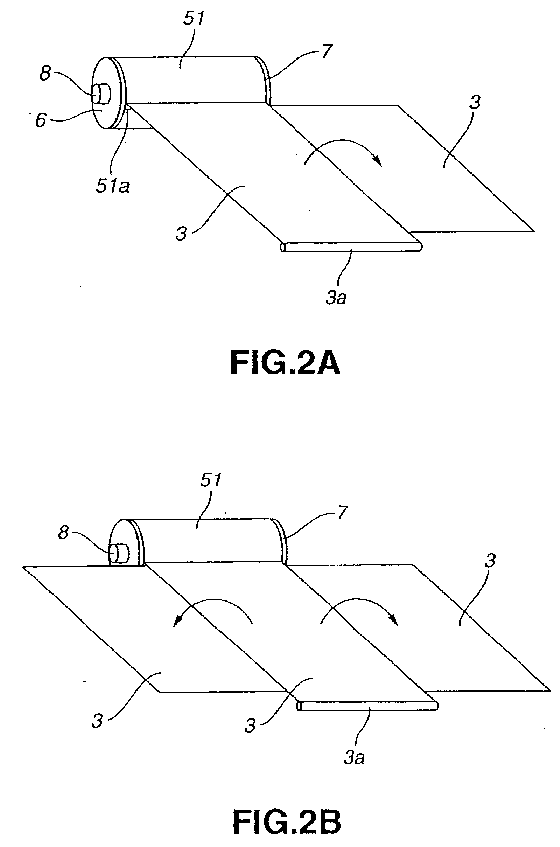

A first embodiment of the present invention will be described in detail by employing the drawings. As a photoelectric charging secondary battery to which the present invention is applied, a photoelectric charging secondary battery 1 as shown in Figs. 1, 2A and 2B will be described as an example.

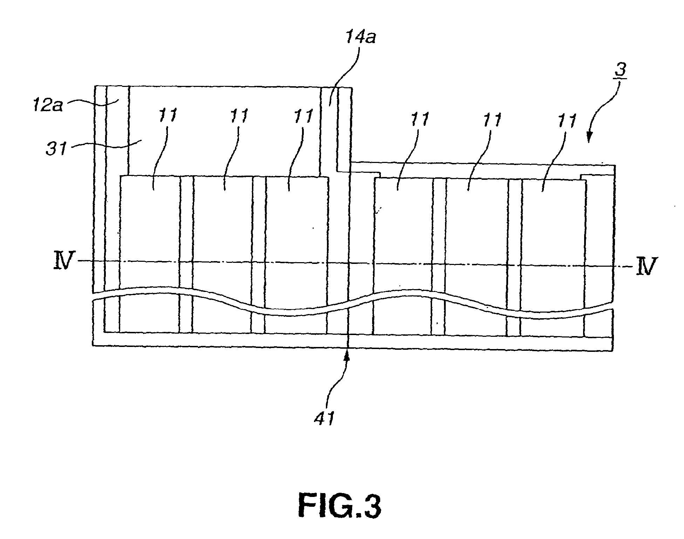

The photoelectric charging secondary battery 1 according to the present invention comprises a cylindrical coil core part 2, a photoelectric conversion sheet 3 having a flexibility coiled and disposed so as to be freely withdrawn out relative to the coil core part 2, and a storage battery 4 and a control circuit part 5 provided in the coil core part 2. The photoelectric charging secondary battery 1 is entirely formed in a cylindrical shape while the photoelectric conversion sheet 3 is coiled on the coil core part 2, as shown in Figs. 1, 2A and 2B. Further, the photoelectric charging secondary battery 1 allows the photoelectric conversion sheet 3 to receive light and electrify the storage battery 4 under a state that the photoelectric conversion sheet 3 is withdrawn out from the coil core part 2, as shown in Fig. 3.

The coil core part 2 is formed in the cylindrical shape with a resin material. As the resin material, for example, ABS (acrylonitrile-butadiene-styrene) resin, SAN (styrene-acrylonitrile) resin, ASA (acrylonitrile-styrene-acrylamide) resin, ACS (acrylonitrile-chlorinated polyethylene-styrene) resin, AAS (acrylonitrile-acrylate-styrene) resin, etc. are preferably suitably used. The coil core part 2 is formed slightly longer than a width on which the photoelectric conversion sheet 3 is coiled. Accordingly, in the photoelectric charging secondary battery 1, the coil core part 2 can coil the photoelectric conversion sheet 3 throughout its entire width. The coil core part 2 has an upper flange 6 and a lower flange 7 respectively provided on both end parts thereof. A photoelectric conversion element is ordinarily provided on the photoelectric conversion sheet.

The upper flange 6 and the lower flange 7 are formed in substantially circular flat plate shapes with the same material as that of the coil core part 2. The upper flange 6 and the lower flange 7 are respectively fixed to both the end parts of the coil core part 2 by a fixing means such as an adhesive. The adhesive which is well-known by itself may be used as long as it does not degrade the present invention. The upper flange 6 and the lower flange 7 may be formed integrally with the coil core part 2.

The upper flange 6 and the lower flange 7 are formed so that each of their diameters is substantially the same as or slightly larger than the diameter of the photoelectric conversion sheet 3 under a state that the photoelectric conversion sheet 3 is coiled on the coil core part 2. Thus, the upper flange 6 and the lower flange 7 can protect the side edge parts of the photoelectric conversion sheet 3 and serve as guides upon coiling the withdrawn out photoelectric conversion sheet 3 on the coil core part 2. Accordingly, the photoelectric conversion sheet 3 can be coiled on the coil core part 2 without a dislocation.

The coil core part 2, the upper flange 6 and the lower flange 7 are desirably formed with a material showing electric insulating characteristics. As materials showing the electric insulating characteristics, for instance in addition to a liquid crystal polymer, denatured polyphenylene ether (PPE), polyether ether ketone (PEEK), polyphenylene sulfide (PPS), polyether sulfone (PES), polysulfone (PSF) etc. as engineering plastics having a chemical resistance, a heat resistance and creep resistance may be exemplified. Thus, in the photoelectric charging secondary battery 1, inner wiring or the like can be prevented from being short-circuited through the above-described parts. These parts can be prevented from coming into contact with, for instance, terminals or the like of a battery housing part of an electric device to be electrically short-circuited.

Further, the coil core part 2, the upper flange 6 and the lower flange 7 are desirably formed with a material excellent in its heat insulating characteristics. As materials having the heat insulating characteristics, polyamide resins such as a para-alamide resin, a meta-alamide resin, etc., vinyl chloride resins, polyester resins, polyethylene resins, polystyrene resins, polyurethane resin, etc. are exemplified. Thus, when the photoelectric charging secondary battery 1 is exposed to high temperature, for example, when the photoelectric charging secondary battery 1 is left on a dashboard of a motor vehicle, the temperature of the storage battery 4 accommodated therein can be prevented from rising. Accordingly, the storage battery 4 can be prevented from being broken. The coil core part 2, the upper flange 6 and the lower flange 7 are desirably colored with a color hardly absorbing light or heat such as white color due to the same reason.

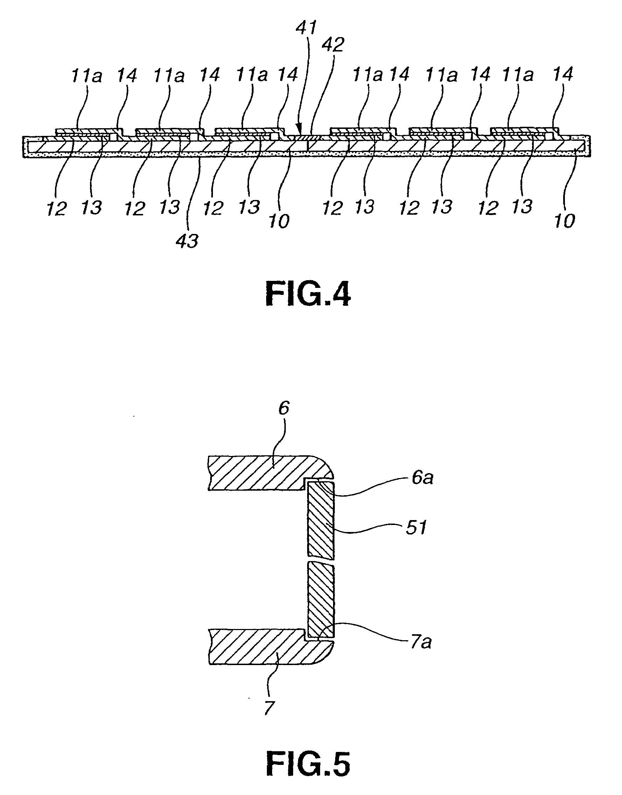

Further, the photoelectric charging secondary battery according to the present invention is provided with an outer peripheral wall 51 as shown in Figs. 1, 2A and 2B. The photoelectric charging secondary battery 1 is provided with the outer peripheral wall 51 having a substantially cylindrical form with the substantially same diameter as those of the upper flange 6 and the lower flange 7. In the photoelectric charging secondary battery 1, the upper flange 6 and the lower flange 7 respectively have a groove part 6a and a groove part 7a to which the side edge parts of the outer peripheral wall 51 are fitted as shown in Fig. 5. Accordingly, in the photoelectric charging secondary battery 1, the outer peripheral wall 51 freely rotates relative to the coil core part 2, the upper flange 6 and the lower flange 7.

Fig. 2A shows a state that a photoelectric conversion element 11 folded in two along the direction to be withdrawn is expanded and spread. Fig. 2B shows a state that the photoelectric conversion element 11 folded threefold along the direction to be withdrawn is expanded and spread. The photoelectric conversion element 11 has light receiving areas respectively increased by twice and three times more than the simple photoelectric conversion sheet 3 having no folding structure and an advantageous electric power storage capability.

The photoelectric conversion sheet 3 according to the present invention has a structure that the photoelectric conversion sheet is folded along the direction to be withdrawn as shown in Figs. 2A and 2B, 3 and 7. The photoelectric conversion sheet may be folded any number of times as long as the photoelectric conversion sheet is coiled on the coil core part 2 and the objects of the present invention are not failed to be achieved. The use of the folding structure makes it possible to increase a light receiving area upon charging, so that a charging operation can be efficiently performed to increase general purpose characteristics and improve a utility. Further, the photoelectric conversion element having flexibility advantageously has little curl and can be easily treated.

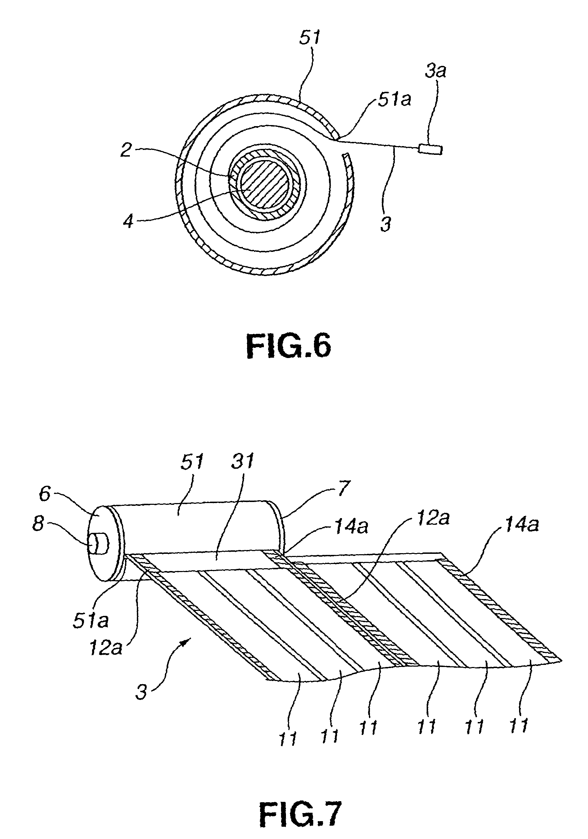

As shown in Fig. 6, on the outer peripheral wall 51, a slit 51a is formed. The slit 51a is formed on the outer peripheral wall 51 with a sufficient width and thickness so as to withdraw out the photoelectric conversion sheet 3. Further, in the photoelectric charging secondary battery 1, an engaging part 3a is formed on the outermost outer peripheral part of the photoelectric conversion sheet 3. This engaging part 3a has a thickness enough to be connected to the slit 51a when the photoelectric conversion sheet 3 is coiled on the coil core part 2. The engaging part 3a functions for preventing the photoelectric conversion sheet 3 from being completely coiled into the outer peripheral wall 51 and functions as a knob when the photoelectric conversion sheet 3 is withdrawn out.

As shown in Figs. 2A and 2B, in the photoelectric charging secondary battery 1, when the storage battery 4 is charged, the engaging part 3a is withdrawn out so that the photoelectric conversion sheet 3 is withdrawn out from the coil core part 2. Further, in the photoelectric charging secondary battery 1, the outer peripheral wall 51 is rotated relative to the coil core part 2 to coil the photoelectric conversion sheet 3 on the coil core part 2.

Accordingly, in the photoelectric charging secondary battery 1, since the outer peripheral wall 51 having the slit 51a is provided so as to freely rotate, the photoelectric conversion sheet 3 is easily withdrawn out and coiled. Further, since the photoelectric charging secondary battery 1 has the outer peripheral wall 51, when the photoelectric charging secondary battery is accommodated in an electric device, the photoelectric conversion sheet 3 is prevented from being uncoiled. Further, the photoelectric conversion sheet 3 can be protected and can be prevented from being broken due to the dust or the impact of an external environment and the storage battery 4 can be prevented from being heated by the direct rays of the sun or the like. In order to more improve the heat prevention effect of the storage battery 4, the outer peripheral wall 51 is desirably colored with a color such as white color hardly absorbing light or heat.

The upper flange 6 and the lower flange 7 are respectively provided with a cathode terminal 8 and an anode terminal 9. The cathode terminal 8 and the anode terminal 9 are formed with a dielectric material and respectively electrically connected to prescribed terminals of the control circuit part 5 by connection means not shown in the drawing. As such dielectric materials, for instance, glass, quartz, ceramics, metal oxides such as magnesium oxide, aluminum oxide, etc., dielectric polymers such as polytetraethylene, etc. may be exemplified.

The photoelectric conversion sheet 3 comprises, as shown in Figs. 3 and 4, a sheet type base board 10 having a flexibility and formed in a substantially rectangular shape, a plurality of photoelectric conversion elements 11 disposed on the sheet type base board 10 and a bent part 41.

The sheet type board 10 is made of a material having electric insulating characteristics and formed in a sheet shape so as to have flexibility. As materials having the electric insulating characteristics, for example, synthetic resins such as polyester, polyamide, polyethylene, etc. are exemplified.

Each photoelectric conversion element 11 is formed in such a way that a first electrode layer 12, a photoelectric conversion layer 13 and a second electrode layer 14 respectively in thin film forms are sequentially laminated on the sheet type base board 10. As a lamination method, the layers respectively forming the photoelectric conversion element 11 are laminated on the sheet type base board 10 in the forms of thin films by various kinds of PVD methods such as a sputtering method or a deposition method, or various kinds of CVD methods such as a plasma CVD method or an MOCVD method. Since the layers are respectively laminated in the forms of thin films, the photoelectric conversion element 11 has a sufficient flexibility like the sheet type base board 10. Further, in the bent part 41, the first electrode layer 12 is electrically connected to the second electrode layer 14 by a conductive part 42. Further, the periphery of the sheet type base board 10 is coated with a conductive part 43, so that the laminated electrodes are integrated. The conductive part 42 and the conductive part 43 may be made of a well-known material by itself that is foldable and electrically conductive.

Further, the photoelectric conversion sheet 3 may have a laminated polymer sheet having flexibility. The laminated polymer sheet serves to cover the light receiving part of the photoelectric conversion element and this part has at least light transmitting characteristics. The laminated polymer sheet preferably covers all the surface of the photoelectric conversion sheet. Further, the laminated polymer sheet is preferably formed so as to protrude from the end part of the photoelectric conversion sheet and protect the end part of the photoelectric conversion sheet. Further, the laminated polymer sheet is preferably provided in the light receiving surface side of the photoelectric conversion sheet and further preferably provided on the back side of the light receiving surface of the photoelectric conversion sheet. Thus, when the photoelectric conversion element having the flexibility is repeatedly withdrawn and extended to increase a light receiving area for use, the damage and deterioration of the photoelectric conversion element due to the repeated bending of the photoelectric conversion element can be reduced. Further, the photoelectric conversion element can be prevented from being broken or degraded due to the repeated slide of a surface as a result of the repeated withdrawing operation of the photoelectric conversion element. Consequently, a power generation efficiency for the entire part of the photoelectric conversion element can be prevented from falling so that a charging performance can be prevented from being lowered. Further, when the photoelectric conversion element is in a coiled state for a long time, the photoelectric conversion sheet is plastically deformed (what is called, curled) so that the photoelectric conversion element is prevented from effectively receiving light. However, the existence of the laminated polymer sheet makes it possible to reduce the plastic deformation and effectively receive light.

As described above, when the laminated polymer sheet is used on the front and back surfaces of the photoelectric conversion sheet, the front and back surfaces may be formed with the same sheet material or suitably formed with different kinds of sheet materials. A material with which at least the light receiving part of the photoelectric conversion element is covered is a light transmitting material. Further, the material desirably has an abrasion resistance for friction and a weather resistance for light. As such materials, halogenated olefins, particularly, polymers of fluorinated olefins or copolymers of olefins therewith are exemplified. To fix these sheets to the photoelectric conversion sheet, adhesive layers may be provided. As materials of the adhesive layer, a copolymer (EVA) of ethylene and vinyl acetate or the like is exemplified.

In the photoelectric conversion sheet 3, the photoelectric conversion elements 11 are respectively electrically connected in series. A cathode terminal 12a and an anode terminal 14a are respectively formed on the electrode layers of the photoelectric conversion element 11 located at both ends along the direction perpendicular to the longitudinal direction. The cathode terminal 12a and the anode terminal 14a are electrically connected to a prescribed terminal of the control circuit part 5.

Further, on the photoelectric conversion element 11, the light such as solar light or the like is made incident on from a side opposite to the sheet type base board 10, that is, a main surface 11a of a side facing an external part. The first electrode layer 12 and the second electrode layer 14 are made of a dielectric material and function as a pair of electrodes relative to the photoelectric conversion layer 13. The photoelectric conversion layer 13 is provided with an amorphous semiconductor thin film such as a pin junction structure of a-Si to generate an electromotive force when the rays of solar light are incident thereon and is formed with a film structure having what is called a photoelectric conversion effect.

The photoelectric conversion layer 13 may have a pn junction structure having, for instance, a p-type organic semiconductor such as perylene and an n-type organic semiconductor such as copper phthalocyanine. The photoelectric conversion layer 13 is not limited to the above-described thin film structure and may have a film structure with a sufficient flexibility and a photoelectric conversion effect.

The first electrode layer 12 is desirably made of a metal material such as Ag, Al, Cr, Ni, Cu, etc. and is formed to have a high reflectance to light received by the photoelectric conversion layer 13. Thus, the light transmitting the photoelectric conversion layer 13 is reflected to make the light incident on the photoelectric conversion layer 13 again so that the photoelectric conversion efficiency of the photoelectric conversion layer 13 can be improved. Further, the second electrode layer 14 is desirably formed as, what is called a transparent electrode made of a material including metal oxide, for instance, SnO₂ or In₂O₃ as a main component. Thus, the light received by the photoelectric conversion layer 13 is efficiently transmitted to improve the photoelectric conversion effect of the photoelectric conversion layer 13.

Figs. 3 and 4 show an example in which the first electrode layer 12 and the second electrode layer 14 of a specific photoelectric conversion element 11 respectively serve as the second electrode layer 14 and the first electrode layer 12 of another photoelectric conversion element 11 adjacent to the above-described photoelectric conversion element 11. Thus, in this example, a plurality of photoelectric conversion elements 11 respectively shares their electrode layers. Accordingly, in the photoelectric conversion sheet 3, the adjacent photoelectric conversion elements 11 are electrically connected in series.

In this case, for instance, the first electrode layer 12 and the second electrode layer 14 may be formed with the material including the metal oxide such as SnO₂ or In₂O₃ as the main component as described above and a light reflecting layer (not shown) made of, for instance, a metallic material may be provided between the first electrode layer 12 and the sheet type base board 10. Thus, each photoelectric conversion element 11 can receive an adequate amount of light through the second electrode layer 14 and can improve the photoelectric conversion efficiency through the light reflecting layer.

In this case, the photoelectric conversion elements 11 are connected together linearly by the electrodes having the substantially same length as the longitudinal length thereof. Accordingly, a fear that a connection failure such as a disconnection may possibly arise can be reduced more than a case in which for instance, the photoelectric conversion elements 11 are connected together at their points by lead wires or the like.

Further, in the photoelectric conversion sheet 3, the photoelectric conversion elements 11 are arranged in parallel with respect to the longitudinal direction of the photoelectric conversion sheet 3. That is, a pair of electrode layers of each photoelectric conversion element 11 is arranged so as to be parallel with the longitudinal direction of the photoelectric conversion sheet 3. Thus, in the photoelectric charging secondary battery, when the photoelectric conversion sheet 3 is withdrawn and extended to electrify the storage battery, a part of the photoelectric conversion elements is not adequately irradiated with light. Even in this case, the power generation efficiency can be prevented from being lowered in the entire part of the photoelectric conversion sheet.

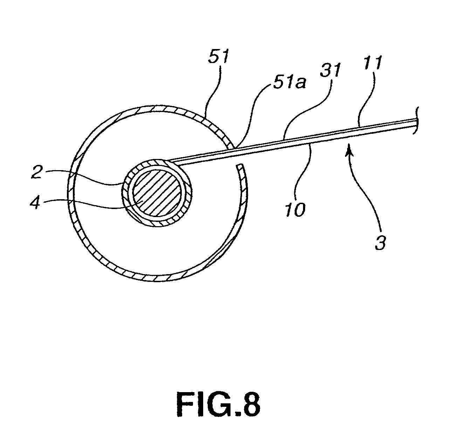

Further, the photoelectric conversion sheet 3 is coiled on the coil core part 2 and disposed so as to be freely withdrawn out and one side part as an innermost periphery is connected and fixed to the coil core part 2. In the photoelectric conversion sheet 3, the above-described cathode terminal 12a and the anode terminal 14a are provided in one side part of the innermost periphery. As shown in Figs. 7 and 8, a sheet part 31 having no photoelectric conversion element 11 and having the cathode terminal 12a and the anode terminal 14a is provided in the photoelectric conversion sheet 3 located from one side part as the innermost periphery of the photoelectric conversion sheet 3 connected and fixed to the coil core part 2 to the end part of the inner peripheral side of the photoelectric conversion element 11 of the photoelectric conversion sheet 3. Thus, the outer peripheral wall 51 of the photoelectric conversion element 11 can be prevented from being screened from light upon charging operation, because the photoelectric conversion element 11 is insufficiently withdrawn out. Further, the photoelectric conversion element 11 can be moved from the inner periphery with high curvature to the outer periphery with low curvature, so that the fatigue and deterioration of the photoelectric conversion element 11 due to bending can be reduced. Further, the sheet part 31 having no photoelectric conversion element can have flexibility higher than that having the photoelectric conversion element and the durability of the photoelectric conversion sheet 3 in connecting and fixing the photoelectric conversion sheet 3 to the coil core part 2 can be more improved. In this case, the sheet part 31 having no photoelectric conversion element may be formed integrally with the photoelectric conversion sheet 3. Further, a sheet made of the same material or another material may be connected to the photoelectric conversion sheet 3 as required to form the sheet part 31.

Further, while the photoelectric conversion sheet 3 is coiled on the coil core part 2, the photoelectric conversion sheet 3 can be disposed so that its light receiving surface is located inside. Thus, when the photoelectric charging secondary battery 1 is discharged and used while the photoelectric conversion sheet 3 is coiled on the coil core part 2, the light receiving surface of the photoelectric conversion sheet 3 is not exposed outward. Thus, the light receiving surface of the photoelectric conversion sheet 3 can be prevented from having flaws and being broken.

The photoelectric conversion sheet 3 is disposed so as to be coiled on the coil core part 2 with its light receiving surface located inside, however, the present invention is not limited to such a structure. When there is little anxiety of breakage as in this embodiment, the photoelectric conversion sheet 3 can be disposed so as to be coiled on the coil core part 2 with its light receiving surface located outside.

The storage battery 4 is accommodated in an inner space of the coil core part 2 and a secondary battery capable of being charged and discharged. The storage batteries 4 specifically include, for instance, a nickel-metal hydride secondary battery, a nickel-cadmium secondary battery, a nickel-zinc secondary battery, a zinc-silver oxide secondary battery, an iron-nickel secondary battery, etc. The storage battery is desirably a nickel-metal hydride secondary battery. Thus, the storage battery 4 can improve energy density per volume and is excellent in environmental adaptability without using heavy metal such as lead or cadmium.

The storage battery 4 may be a standard dry cell having a prescribed standard form for a battery. The storage battery 4 may be an R6 type battery called a AA battery, an R03 type battery called a AAA battery, an R1 type battery called an N battery, or an R44 type battery or R1220 type battery called a button type battery, etc. determined by IEC or JIS or the like. Accordingly, in the photoelectric charging secondary battery I, a development and manufacture cost can be suppressed.

However, in the storage battery 4, the inner space of the coil core part 2 may be desirably directly filled with a storage battery component such as electrolyte solution without using a standard storage battery from the viewpoint of a power storage capacity. Accordingly, the storage battery 4 can be filled with the storage battery component to a space corresponding to an outer package part of the standard storage battery to increase the power storage capacity.

Further, the storage battery 4 is detachably attached to the coil core part 2. Specifically, a part of the lower flange 7 may be freely opened and closed and the storage battery 4 may be inserted to and detached from the opening and closing part relative to the coil core part 2. Otherwise, for instance, while the photoelectric conversion sheet 3 is withdrawn out and extended, a part of the coil core part 2 exposed outward may be freely opened and closed. Then, the storage battery 4 may be attached and detached relative to the coil core part 2 from the opening and closing part.

Thus, in the photoelectric charging secondary battery 1, even when the storage battery 4 is repeatedly charged and discharged and its life ends, only the storage battery 4 may be changed. Accordingly, in the photoelectric charging secondary battery 1, other parts having longer lives than the life of the storage battery 4 do not need to be discarded together with the storage battery 4 whose life ends, which is preferable from the viewpoint of effective utilization of resources.

Thus, the photoelectric charging secondary battery 1 can be used as a charger for electrifying the storage battery 4. That is, the storage battery 4 is electrified by the photoelectric charging secondary battery 1 and the electrified storage battery 4 is taken out from the photoelectric charging secondary battery 1 so that the storage battery 4 can be used as a power source of an electronic device.

Further, the storage battery 4 employs the standard storage battery as described above and detachably attached to the coil core part 2. As described above, since the standard storage battery is detachably used as the storage battery 4, when the storage battery 4 is replaced by another storage battery in the photoelectric charging secondary battery 1, this replacing operation can be simply and easily carried out. Also in this case, as the charger for electrifying the storage battery 4, the photoelectric charging secondary battery I may be used as described above. Accordingly, the storage battery 4 having the standard form for the storage battery can be freely attached to and detached from the photoelectric charging secondary battery 1 and can be readily used for an electric device employing an ordinary standard battery as a power source.

Further, the discharge voltage of the storage battery 4 is desirably about 0.6 to 1.9 V. Thus, the photoelectric charging secondary battery 1 is used for the electric device employing an ordinary cylindrical standard battery as a power source. In this case, the photoelectric charging secondary battery 1 is prevented from being incapable of reaching the operating voltage of the electric device so that the electric device cannot operate. Further, the photoelectric charging secondary battery can be prevented from exceeding an allowable voltage to break the electric device.

The control circuit part 5 is disposed in the inner space of the coil core part 2, as shown in Fig. 1. The control circuit part 5 suitably has one or more kinds of functions selected from a rectifying function of the photoelectric conversion sheet 3 and the storage battery 4, an overcharge preventing function of the storage battery 4 by the photoelectric conversion sheet 3 and an over-discharge preventing function of the storage battery 4, etc. The control circuit part 5 may be specifically composed of an electric circuit using a diode or an operational amplifier or the like. However, since the control circuit part 5 may be composed of a rectifying circuit, an overcharge preventing circuit and an over-discharge preventing circuit ordinarily used in an electric/electronic field, a detailed description of the structure of the circuit will be omitted.

The control circuit part 5 has at least four terminals. To these terminals, the cathode terminal 12a and the anode terminal 14a of the photoelectric conversion sheet 3 and the cathode terminal and the anode terminal of the storage battery 4 are respectively electrically connected. Then, the control circuit part 5 functions so as to efficiently electrify the storage battery 4 by the photoelectric conversion sheet 3 and discharge the storage battery 4.

The photoelectric charging secondary battery 1 is constructed as described above and is entirely formed in a substantially cylindrical shape while the photoelectric conversion sheet 3 is coiled on the coil core part 2 as shown in Figs. 2A and 2B. Under this state, the photoelectric charging secondary batteries 1 are easily detachably used for the electric devices as power sources of the electric devices. As such electric devices, a portable telephone, a portable music reproducing device, etc., may be exemplified.

In the photoelectric charging secondary battery 1, the dimension of each part is preferably determined so as to have a prescribed standard form for a cylindrical battery while the photoelectric conversion sheet 3 is coiled on the coil core part 2. The photoelectric charging secondary battery 1 may be specifically, for example, what is called an R20 type battery called a D battery, an R14 type battery called a C battery, or an R6 type battery called a AA battery which are determined by the IEC or the JIS or the like.

Thus, the photoelectric charging secondary battery 1 can be easily employed for the electronic device designed to use and accommodate an ordinary cylindrical standard battery therein. Therefore, in this case, the photoelectric charging secondary battery 1 can convert the optical energy of solar light to electric energy and store the electric energy and can be used as a power source of the electric device using an ordinarily employed cylindrical standard battery.

Further, the photoelectric charging secondary battery 1 electrifies the storage battery 4 while the photoelectric conversion sheet 3 is withdrawn out and extended from the coil core part 2, as shown in Fig. 3. At this time, the photoelectric charging secondary battery 1 can direct all of the light receiving area of the photoelectric conversion sheet 3 to the direction from which the photoelectric conversion sheet 3 is irradiated with light. Accordingly, the power generating force of the photoelectric conversion sheet 3 can be improved. Therefore, the photoelectric charging secondary battery 1 can practically adequately shorten a charging time upon charging the storage battery 4.

The photoelectric charging secondary battery according to the present invention is not limited to the structure that one side as the innermost periphery of the photoelectric conversion sheet 3 is connected and fixed to the coil core part 2 as described above. For example, the photoelectric conversion sheet 3 may be detachably attached to the photoelectric charging secondary battery 1. Thus, when a physical or electric damage is generated in the photoelectric conversion sheet 3, the photoelectric charging secondary battery 1 can replace the photoelectric conversion sheet 3 by a normal photoelectric conversion sheet 3 and use it. That is, in the photoelectric charging secondary battery 1 according to the present invention, the photoelectric conversion sheet 3 may be electrically connected to the storage battery 4 at least upon charging.

Now, a second embodiment of the present invention will be described.

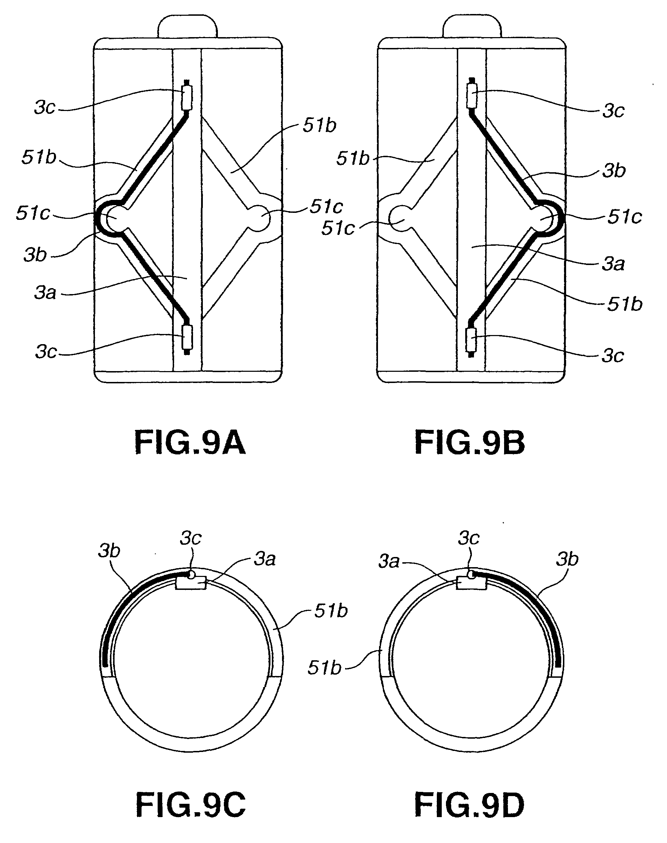

In a photoelectric charging secondary battery of the second embodiment, an engaging part 3a is reformed so as to make a photoelectric charging operation easy. That is, as shown Figs. 9A to 9D, an arched body 3b can be fixed to fixing parts 3c so as to be removable and freely rotate in the engaging part 3a. The arched body 3b has a circular arc shape when viewed from a side surface and has the same curvature as that of an outer peripheral wall 51. The arched body 3b can be practically buried in a groove part 51b formed in the outer peripheral wall 51. The groove parts 51b may be symmetrically formed. That is, an expansible elasticity is applied to the arched body 3b. The arched body 3b is removed from the fixing parts 3c and replaced by reversing it so that the arched body 3b can be formed in a circular arc shape with reverse curvature when viewed from a side surface. With this replacement, the arched body 3b is accommodated in another groove part 51b located at a position opposite to the above-described groove part. When the arched body 3b is accommodated in the groove part 51b, the arched body 3b can be fitted and fixed to a fitting part 51c formed on the outer peripheral wall 51.

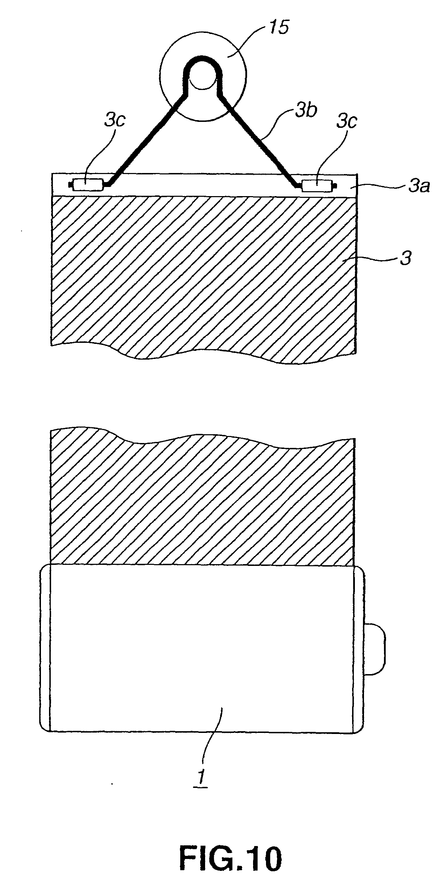

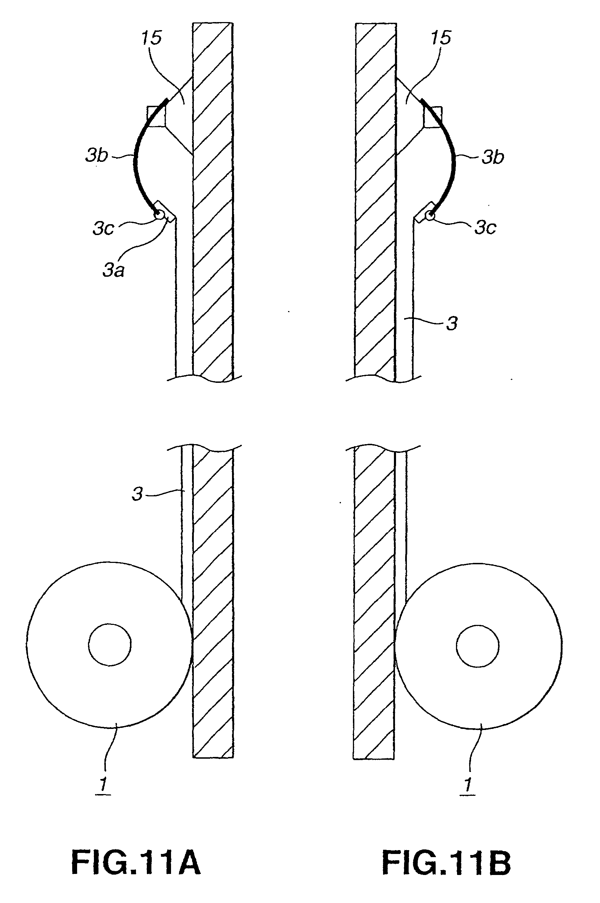

The arched body 3b of the present invention is hooked on a fixing means 15 as shown in Figs. 10, 11A and 11B. Accordingly, a photoelectric conversion sheet can be expanded upward and downward inside or outside a glass window capable of easily transmitting sunlight or on an outer wall to easily perform a photoelectric charging operation. Further, when the photoelectric conversion sheet is disposed, for instance, inside or outside the glass window by the replacement of the arched body 3b, the photoelectric conversion sheet 3 can be made to come into more tightly contact with the glass and directed toward the direction of external light. Further, the photoelectric conversion sheet 3 can be made more tightly contact with the glass or the like and directed to the external light due to the arched form of the arched body 3b. The orientation of the photoelectric conversion sheet 3 can be hardly changed due to the disturbance of wind or the like. As the fixing means 15, a sucker or the like is preferable to a base material good in its flatness such as a glass window, however, a specifically fixed fixing means may be used. In this case, for example, an adhesive or a pin may fix the fixing means or a hook with a marketed adhesive may be used.

When the storage battery 4 is electrified, the engaging part 3a is withdrawn out to withdraw out the photoelectric conversion sheet 3 from the coil core part 2 as shown in Figs. 2A and 2B. Further, in the photoelectric charging secondary battery 1, for instance, the outer peripheral wall 51 is rotated relative to the coil core part 2 so that the photoelectric conversion sheet 3 can be coiled on the coil core part 2.

In the photoelectric charging secondary battery according to the present invention, the form of the storage battery 4, the number of storage batteries and a position in which the storage battery is accommodated are not limited to a specific form, number and position. For example, a plurality of storage batteries 4 may be provided in the photoelectric charging secondary battery 1 and may be supported and fixed by an elastic member such as a coil spring or a leaf spring not to be dislocated.

The photoelectric charging secondary battery according to the present invention can be employed as a power source of an ordinarily used electric device. Since the photoelectric charging secondary battery according to the present invention can be conveniently carried and freely used, the photoelectric charging secondary battery is especially preferably used for a portable telephone, a portable music reproducing device, etc.

Further, a third embodiment of the present invention will be described.

A photoelectric charging secondary battery 1 of the third embodiment has an engaging part 3a formed on the outer peripheral part of a photoelectric conversion sheet 3, as shown in Fig. 6. This engaging part 3a desirably has a thickness enough to be connected to a slit 51a when the photoelectric conversion sheet 3 is coiled on a coil core part 2. The engaging part 3a has a function for preventing the photoelectric conversion sheet 3 from being completely coiled into an outer peripheral wall 51 and a function as a grip for withdrawing out the photoelectric conversion sheet 3.

When a storage battery 4 is electrified, the engaging part 3a is withdrawn out to withdraw out the photoelectric conversion sheet 3 from the coil core part 2 as shown in Figs. 2A and 2B. On the contrary, the outer peripheral wall 51 is rotated relative to the coil core part 2, so that the photoelectric conversion sheet 3 can be coiled on the coil core part 2.

As a method for easily coiling the photoelectric conversion sheet 3 in the present invention, for instance, a method may be exemplified in which a grip means is formed on an upper flange 6 or a lower flange 7. Thus, the photoelectric conversion sheet 3 is withdrawn out and extended from the coil core part or the photoelectric conversion sheet accommodated in the coil core part is withdrawn out.

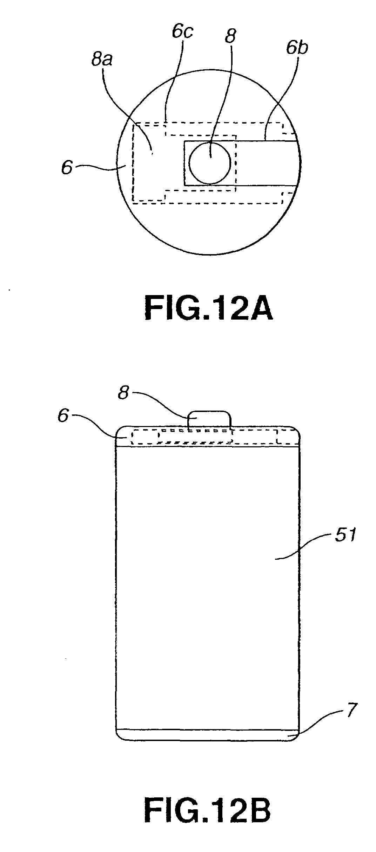

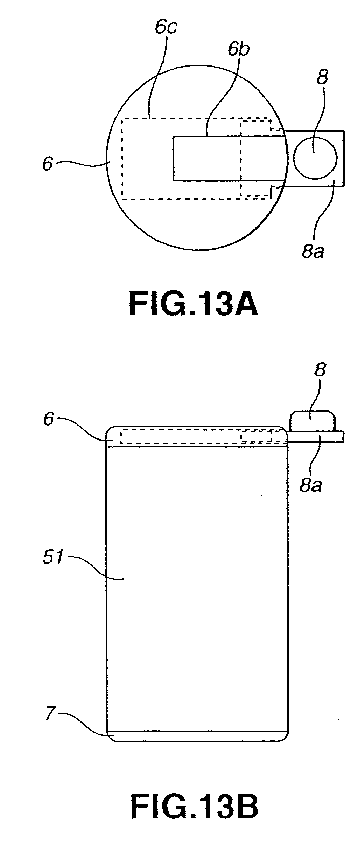

As a method for forming a grip on the upper flange 6 or the lower flange 7, for example, a method shown in Figs. 12A, 12B, 13A and 13B may be exemplified as one embodiment in which the upper flange 6 is reformed and a cathode terminal 8 is included. Specifically, a slider 8a for sliding the upper flange 6 is formed on the upper flange. A guide groove 6b for assisting the slide of the cathode terminal 8 is formed on the outer surface of the upper flange 6. A guide hole 6c for assisting the slide of the slider 8a is formed in the upper flange 6. As shown in Fig. 12, the slider 8a is accommodated in the upper flange 6 under an ordinary state and the cathode terminal 8 is located at the central part of the upper flange 6. When the photoelectric conversion sheet 3 is coiled, the slider 8a slides along the guide hole 6c for assisting its slide as shown in Fig. 13. The cathode terminal 8 slips out along the guide groove 6b for assisting the slide and stops on the outer peripheral part of the upper flange 6. Under this state, the cathode terminal 8 can be used as a grip part for making the coiling operation of the photoelectric conversion sheet 3 easy.

Now, a fourth embodiment of the present invention will be described.

A photoelectric charging secondary battery 1 of the fourth embodiment is formed as described above and is entirely formed in a substantially cylindrical shape while a photoelectric conversion sheet 3 is coiled on a coil core part 2 as shown in Figs. 2A and 2B. Under this state, the photoelectric charging secondary battery 1 is easily used and detachably attached to an electric device as a power source thereof. As such electric devices, a portable telephone, a portable music reproducing device, etc. may be exemplified.

In the photoelectric charging secondary battery 1, the dimension of each part is desirably determined so as to have a prescribed standard form for a cylindrical battery while the photoelectric conversion sheet 3 is coiled on the coil core part 2. The photoelectric charging secondary battery 1 may be specifically, for example, what is called an R20 type battery called a D battery, an R14 type battery called a C battery, or an R6 type battery called a AA battery which are determined by the IEC or the JIS or the like.

Accordingly, the photoelectric charging secondary battery 1 can be easily employed for an electric device designed to accommodate and use an ordinary cylindrical standard battery. Thus, in this case, the photoelectric charging secondary battery 1 can convert the optical energy of solar light to electric energy and store the electric energy and can serve as a power source of the electric device using an ordinarily employed cylindrical standard battery.

Further, the photoelectric charging secondary battery 1 electrifies a storage battery 4 while the photoelectric conversion sheet 3 is withdrawn out and extended from the coil core part 2 as shown in Fig. 3. At this time, the photoelectric charging secondary battery 1 can direct all the light receiving area of the photoelectric conversion sheet 3 to the direction in which the photoelectric conversion sheet 3 is irradiated with light. Accordingly, the power generating force of the photoelectric conversion sheet 3 can be improved. Thus, in the photoelectric charging secondary battery 1, a charging time upon electrifying the storage battery 4 can be practically adequately shortened.

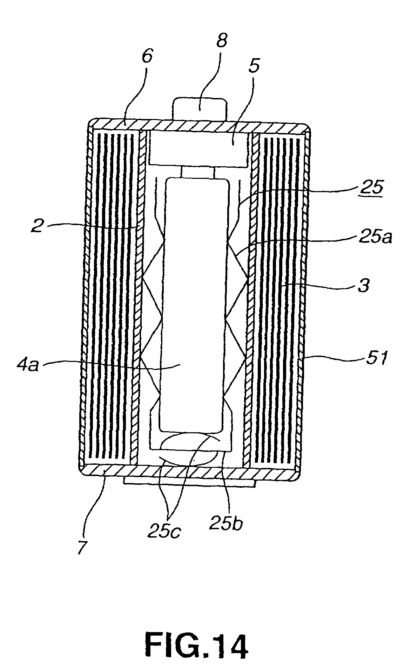

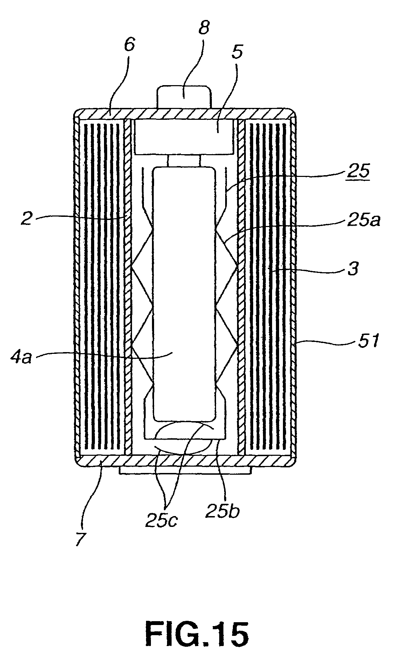

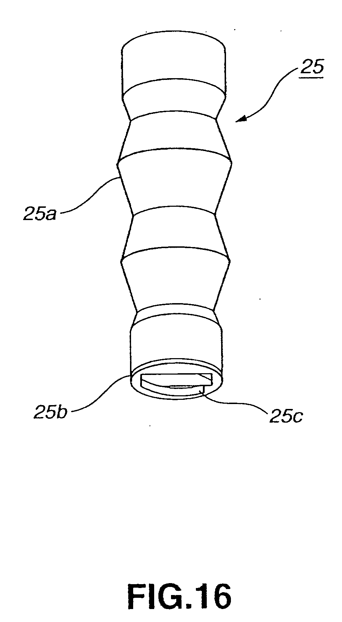

The photoelectric charging secondary battery according to the present invention wherein that a storage battery 4 having a specific form and a storage battery 4a smaller than.the storage battery 4 are used, as shown in Figs. 14 to 16. For instance, as shown in Fig. 14, the photoelectric charging secondary battery according to the present invention having a D battery form is charged with a storage battery 4 having a AA battery form. As shown in Fig. 15, for instance, when photoelectric charging secondary battery is charged with a storage battery 4a having a AAA battery form, the storage battery 4a is fixed by using an auxiliary means 25 to realize an electric conduction. The auxiliary means 25 may be composed of, for instance, an elastic part 25a for fixing a side peripheral surface, elastic parts 25c for fixing end faces and an elastic base material part 25b for fixing an electrically conductive end face. In the present invention, the end part of the storage battery 4a needs to be electrically conducted to the photoelectric charging secondary battery by the elastic parts 25c for fixing the end faces. It is to be understood that the auxiliary means 25 may be composed of an entirely integral conductive material (for instance, a copper plate, an iron plate, etc.). Further, the elastic part 25a for fixing the side peripheral surface may be composed of an insulating material, for instance, a polymer material. According to such a structure, instead of the storage battery 4 having the specific form, a smaller storage battery 4a may be fixed to obtain an electric conduction. When any form of the auxiliary means may be employed without spoiling the objects of the present invention.

Further, the photoelectric charging secondary battery according to the present invention is not limited to the structure that one side as the innermost periphery of the photoelectric conversion sheet 3 is connected and fixed to the coil core part 2. For example, the photoelectric conversion sheet 3 may be detachably attached to the photoelectric charging secondary battery 1. Accordingly, in the photoelectric charging secondary battery, when the physical or the electric damage is generated in the photoelectric conversion sheet 3, the photoelectric conversion sheet 3 may be replaced by a normal photoelectric conversion sheet 3 to be used. That is, in the photoelectric charging secondary battery according to the present invention, the photoelectric conversion sheet 3 may be electrically connected to the storage battery 4 at least upon charging.

As described above, the photoelectric charging secondary battery according to the present invention can use a storage battery having a standard form, increase its general purpose characteristics and improve its utility. Further, the flexible photoelectric conversion element can be easily treated and light can be effectively received. Therefore, according to the photoelectric charging secondary battery of the present invention, the optical energy of solar light can be practically employed as the power source of electric devices. Further, an environmental pollution due to the generation of harmful exhaust materials can be prevented. Further, global resources can be effectively utilized.

Further, the photoelectric conversion element can be fixed to a specific direction, easily withdrawn out and accommodated. Still further, the storage batteries having a plurality of forms can be used.

### Industrial Applicability

As described above, the present invention relates to a photoelectric charging secondary battery comprising: a cylindrical coil core part; a photoelectric conversion element having a flexibility coiled and disposed so as to be freely withdrawn out relative to the coil core part; a storage battery capable of being charged and discharged, and a control circuit part for controlling the charge and discharge of the storage battery. The photoelectric charging secondary battery is entirely formed in a substantially cylindrical shape while the photoelectric conversion element is coiled on the coil core part. The storage battery is detachably attached to the coil core part and the photoelectric conversion element is folded along a direction to be withdrawn. A means for fixing the engaging part of the withdrawing end part of the photoelectric conversion element to other member is provided. The grip means is provided in the coil core part. The elastic holding means for the storage battery is provided Thus, the conveniently treated and accommodated photoelectric charging secondary battery with good charging efficiency can be formed.

## Claims

1. A photoelectric charging secondary battery comprising:
a cylindrical coil core part;
a photoelectric conversion element having a flexibility coiled and disposed so as to be freely withdrawn out relative to the coil core part;
a storage battery capable of being charged and discharged; and
a control circuit part for controlling the charge and discharge of the storage battery, the photoelectric charging secondary battery being entirely formed in a substantially cylindrical shape while the photoelectric conversion element is coiled on the coil core part, wherein the storage battery is detachably attached to the coil core part and the photoelectric conversion element is folded along a direction to be withdrawn.

2. The photoelectric charging secondary battery according to claim 1, wherein while the photoelectric conversion element is coiled on the coil core part, the photoelectric charging secondary battery is configured in a prescribed standardized form for a cylindrical battery.

3. The photoelectric charging secondary battery according to claim 1, wherein the photoelectric conversion element is folded in two along the direction to be withdrawn.

4. The photoelectric charging secondary battery according to claim 1, wherein the photoelectric conversion element is folded threefold along the direction to be withdrawn.

5. An electric device using a photoelectric charging secondary battery which comprises:
a cylindrical coil core part;
a photoelectric conversion element having a flexibility coiled and disposed so as to be freely withdrawn out relative to the coil core part;
a storage battery capable of being charged and discharged; and
a control circuit part for controlling the charge and discharge of the storage battery, the photoelectric charging secondary battery being entirely formed in a substantially cylindrical shape while the photoelectric conversion element is coiled on the coil core part, wherein the storage battery is detachably attached to the coil core part and the photoelectric conversion element is folded along a direction to be withdrawn.

6. A photoelectric charging secondary battery comprising:
a cylindrical coil core part;
a photoelectric conversion element having a flexibility coiled and disposed so as to be freely withdrawn out relative to the coil core part;
a storage battery capable of being charged and discharged; and
a control circuit part for controlling the charge and discharge of the storage battery, the photoelectric charging secondary battery being entirely formed in a substantially cylindrical shape while the photoelectric conversion element is coiled on the coil core part, wherein an upper flange and a lower flange located at both the ends of the coil core part and respectively formed in substantially circular flat plate shapes are provided integrally with the coil core part; a cylindrical outer peripheral wall which covers the photoelectric conversion element coiled on the coil core part and has a withdrawing hole as a port for withdrawing the photoelectric conversion element is provided; the outer peripheral wall is supported so as to freely rotate with the upper flange and the lower flange; the withdrawn out photoelectric conversion element is coiled to an inner space formed by the coil core part and the outer peripheral wall by rotating the outer peripheral wall; and the engaging part of the withdrawing end part of the photoelectric conversion element is provided with a means capable of fixing the photoelectric conversion element to the other member.

7. The photoelectric charging secondary battery according to claim 6, wherein while the photoelectric conversion element is coiled on the coil core part, the photoelectric charging secondary battery is configured in a prescribed standardized form for a cylindrical battery.

8. The photoelectric charging secondary battery according to claim 6, wherein the storage battery has a prescribed standardized form for a cylindrical battery.

9. The photoelectric charging secondary battery according to claim 6, wherein an arched body is fixed to the engaging part so as to freely rotate.

10. The photoelectric charging secondary battery according to claim 9, wherein the arched body is circularly bent viewed from a side surface side.

11. The photoelectric charging secondary battery according to claim 7, wherein the arched body is removable and the circularly bent part from the side surface side can be reversed.

12. The photoelectric charging secondary battery according to claim 7, wherein the curvature of the circularly bent part of the arched body from the side surface side is substantially the same as that of the outer peripheral wall.

13. The photoelectric charging secondary battery according to claim 7, wherein the curvature of the circularly bent part of the arched body from the side surface side is substantially the same as that of the outer peripheral wall and the arched body is accommodated in the outermost peripheral curved surface of the outer peripheral wall.

14. The photoelectric charging secondary battery according to claim 7, wherein the arched body is accommodated in the outermost peripheral curved surface of the outer peripheral wall and the rotation of the arched body is engaged.

15. The photoelectric charging secondary battery according to claim 6, wherein the fixing means is a sucker, an adhesive, a pin, or a hook with an adhesive.

16. The photoelectric charging secondary battery according to claim 6, wherein the other member is a surface facing a space of a room having a glass window, a surface facing the outside air of the glass window, or a wall surface of a building.

17. An electric device using a photoelectric charging secondary battery comprising:
a cylindrical coil core part;
a photoelectric conversion element having a flexibility coiled and disposed so as to be freely withdrawn out relative to the coil core part;
a storage battery capable of being charged and discharged; and
a control circuit part for controlling the charge and discharge of the storage battery, the photoelectric charging secondary battery being entirely formed in a substantially cylindrical shape while the photoelectric conversion element is coiled on the coil core part, wherein an upper flange and a lower flange located at both the ends of the coil core part and respectively formed in substantially circular flat plate shapes are provided integrally with the coil core part; a cylindrical outer peripheral wall which covers the photoelectric conversion element coiled on the coil core part and has a withdrawing hole as a port for withdrawing the photoelectric conversion element is provided; the outer peripheral wall is supported so as to freely rotate with the upper flange and the lower flange; the withdrawn out photoelectric conversion element is coiled to an inner space formed by the coil core part and the outer peripheral wall by rotating the outer peripheral wall; and the engaging part of the withdrawing end part of the photoelectric conversion element is provided with a means capable of fixing the photoelectric conversion element to the other member.

18. A photoelectric charging secondary battery comprising:
a cylindrical coil core part;
a photoelectric conversion element having a flexibility coiled and disposed so as to be freely withdrawn out relative to the coil core part;
a storage battery capable of being charged and discharged; and
a control circuit part for controlling the charge and discharge of the storage battery, the photoelectric charging secondary battery being entirely formed in a substantially cylindrical shape while the photoelectric conversion element is coiled on the coil core part, wherein an upper flange and a lower flange located at both the ends of the coil core part and respectively formed in substantially circular flat plate shapes are provided integrally with the coil core part; a cylindrical outer peripheral wall which covers the photoelectric conversion element coiled on the coil core part and has a withdrawing hole as a port for withdrawing the photoelectric conversion element is provided; the outer peripheral wall is supported so as to freely rotate with the upper flange and the lower flange; the withdrawn out photoelectric conversion element is coiled to an inner space formed by the coil core part and the outer peripheral wall and a grip means is formed in the coil core part.

19. The photoelectric charging secondary battery according to claim 18, wherein while the photoelectric conversion element is coiled on the coil core part, the photoelectric charging secondary battery is configured in a prescribed standardized form for a cylindrical battery.

20. The photoelectric charging secondary battery according to claim 18, wherein the photoelectric conversion element is carried by a photoelectric conversion sheet.

21. The photoelectric charging secondary battery according to claim 18, wherein the grip means formed in the coil core part serves to withdraw out and extend the photoelectric conversion sheet from the coil core part or to stretch the photoelectric conversion sheet accommodated in the coil core part and easily rotate the core part.

22. An electric device using a photoelectric charging secondary battery comprising:
a cylindrical coil core part;
a photoelectric conversion element having a flexibility coiled and disposed so as to be freely withdrawn out relative to the coil core part;
a storage battery capable of being charged and discharged; and
a control circuit part for controlling the charge and discharge of the storage battery, the photoelectric charging secondary battery being entirely formed in a substantially cylindrical shape while the photoelectric conversion element is coiled on the coil core part, wherein an upper flange and a lower flange located at both the ends of the coil core part and respectively formed in substantially circular flat plate shapes are provided integrally with the coil core part; a cylindrical outer peripheral wall which covers the photoelectric conversion element coiled on the coil core part and has a withdrawing hole as a port for withdrawing the photoelectric conversion element is provided; the outer peripheral wall is supported so as to freely rotate with the upper flange and the lower flange; the withdrawn out photoelectric conversion element is coiled to an inner space formed by the coil core part and the outer peripheral wall and a grip means is formed in the coil core part.

23. A photoelectric charging secondary battery comprising:
a cylindrical coil core part;
a photoelectric conversion element having a flexibility coiled and disposed so as to be freely withdrawn out relative to the coil core part;
a storage battery capable of being charged and discharged; and
a control circuit part for controlling the charge and discharge of the storage battery, the photoelectric charging secondary battery being entirely formed in a substantially cylindrical shape while the photoelectric conversion element is coiled on the coil core part, wherein the storage battery is detachably attached to the coil core part and the storage battery can be replaced by two or more kinds of storage batteries having different sizes.

24. The photoelectric charging secondary battery according to claim 23, wherein while the photoelectric conversion element is coiled on the coil core part, the photoelectric charging secondary battery is configured in a prescribed standardized form for a cylindrical battery.

25. The photoelectric charging secondary battery according to claim 23, wherein the discharge voltage of the storage battery ranges from 0.6 to 1.9 V.

26. The photoelectric charging secondary battery according to claim 24, wherein the standard for the cylindrical battery is a D type battery, a C type battery, or a AA type battery.

27. The photoelectric charging secondary battery according to claim 23, wherein the storage battery has a prescribed standardized form for a cylindrical battery.

28. The photoelectric charging secondary battery according to claim 27, wherein the standard for the cylindrical battery of the storage battery is a AA type battery, a AAA type battery, an N type battery, or a button type battery.

29. The photoelectric charging secondary battery according to claim 23, wherein a holding means is used in the coil core part of the storage battery upon using the storage battery of a small size.

30. The photoelectric charging secondary battery according to claim 29, wherein the holding means of the storage battery holds the storage battery by an elastic force.

31. The photoelectric charging secondary battery according to claim 29, wherein the holding means of the storage battery of the small size is made of a conductive material.

32. An electric device using a photoelectric charging secondary battery comprising:
a cylindrical coil core part;
a photoelectric conversion element having a flexibility coiled and disposed so as to be freely withdrawn out relative to the coil core part;
a storage battery capable of being charged and discharged; and
a control circuit part for controlling the charge and discharge of the storage battery, the photoelectric charging secondary battery being entirely formed in a substantially cylindrical shape while the photoelectric conversion element is coiled on the coil core part, wherein the storage battery is detachably attached to the coil core part and the storage battery can be replaced by two or more kinds of storage batteries having different sizes.
